# EUROPEAN PATENT APPLICATION

(11) **EP 4 429 368 A1**
(43) Date of publication of application: **11.09.2024**
(21) Application number: 22897604.9
(22) Date of filing: 08.11.2022
(51) Int. Cl.: H04W 72/04

(54) **INFORMATION RECEIVING METHOD AND APPARATUS, AND INFORMATION SENDING METHOD AND APPARATUS**

(30) Priority: 24.11.2021 CN 202111405174
(71) Applicant: Huawei Technologies Co., Ltd., Shenzhen, Guangdong 518129 (CN)
(72) Inventor: LU, Zhenwei, Shenzhen, Guangdong 518129 (CN); WU, Yiling, Shenzhen, Guangdong 518129 (CN); CHEN, Jun, Shenzhen, Guangdong 518129 (CN)
(74) Representative: Körber, Martin Hans
(86) International application number: PCT/CN2022/130547
(87) International publication number: WO 2023/093521

(57) **Abstract**

An information receiving method, an information sending method, and an apparatus are provided. The method includes at least the following: A terminal receives a first frame from a network device based on a first frequency domain width, where the first frame includes first information. The terminal determines a second frequency domain width based on the first information. The terminal receives a second frame from the network device based on the second frequency domain width, where the second frame includes second information, the second frequency domain width is used to determine transmission duration of one bit or symbol in the second information, and the second frame and the first frame are a same frame or different frames.

## Description

### CROSS-REFERENCE TO RELATED APPLICATIONS

This application claims priority to Chinese Patent Application No. 202111405174.2, filed with the China National Intellectual Property Administration on November 24, 2021 and entitled "INFORMATION RECEIVING METHOD, INFORMATION SENDING METHOD, AND APPARATUS", which is incorporated herein by reference in its entirety.

### TECHNICAL FIELD

Embodiments of this application relate to the field of communication technologies, and in particular, to an information receiving method, an information sending method, and an apparatus.

### BACKGROUND

A radio frequency identification (radio frequency identification, RFID) technology is a non-contact automatic identification technology. A reader or a reader/writer may send an excitation signal to a low-cost tag, and the tag may send a backscatter signal to the reader based on excitation of the excitation signal. In this manner, the reader may identify an identity (identification, ID) of the tag, and perform operations such as reading and writing on the tag. How the reader or the reader/writer sends downlink information to the tag and how the tag receives the downlink information are technical problems to be resolved in this application.

### SUMMARY

This application provides an information receiving method, an information sending method, and an apparatus, so that a network device flexibly sends information to a terminal.

According to a first aspect, an information receiving method is provided, where the method may be performed by a terminal, and the terminal may be a tag. The method includes: receiving a first frame from a network device based on a first frequency domain width, where the first frame includes first information; determining a second frequency domain width based on the first information; receiving a second frame from the network device based on the second frequency domain width, where the second frame includes second information, the second frequency domain width is used to determine transmission duration of one bit or symbol in the second information, and the second frame and the first frame are a same frame or different frames.

In a current design, a fixed frequency domain width of 180 kHz is used for downlink information transmitted between a reader and a tag, and the frequency domain width is also referred to as a channel bandwidth. In this way, flexibility of the frequency domain width is poor. However, in this design, the reader may first send the first frame to the tag by using a fixed frequency domain bandwidth, for example, a frequency domain bandwidth of 180 kHz. The first information in the first frame may explicitly indicate or implicitly indicate a frequency domain bandwidth other than the fixed frequency domain bandwidth, for example, the second frequency domain bandwidth, so that downlink data may be sent by using a plurality of frequency domain bandwidths, thereby improving flexibility of a frequency domain width in downlink transmission. Especially, when the second frequency domain width is greater than the first frequency domain width, a rate at which the reader sends the downlink information may be increased.

In a possible design, the receiving a first frame from a network device based on a first frequency domain width includes: receiving the first frame from the network device based on a first subcarrier spacing SCS and the first frequency domain width; and the receiving a second frame from the network device based on the second frequency domain width includes: receiving the second frame from the network device based on a second SCS and the second frequency domain width, where the second SCS is the same as or different from the first SCS.

In a possible design, there is a correspondence between the second SCS and the second frequency domain width. When the second SCS is 15 kHz, a value of the second frequency domain width is at least one of the following: 180 kHz, 360 kHz, 540 kHz, or 720 kHz; or when the second SCS is 30 kHz, a value of the second frequency domain width is at least one of the following: 360 kHz or 720 kHz.

In a current solution, downlink transmission between the reader and the tag uses a fixed SCS of 15 kHz and a fixed frequency domain width of 180 kHz. In this design, different SCSs and different frequency domain widths may be supported between the reader and the tag, so that a downlink transmission mechanism is more flexible.

In a possible design, the first information is common signaling. The common signaling includes indication information of the second frequency domain width, and the second information is downlink data.

In the foregoing design, the reader may send the common signaling to the tag by using a fixed frequency domain bandwidth, for example, the second frequency domain bandwidth, where the common signaling carries the indication information of the second frequency domain bandwidth. Then, the reader may send the downlink data to the tag by using the indicated second frequency domain bandwidth, and explicitly indicate a frequency domain bandwidth of the downlink data by using the common signaling, so that the downlink data may be sent by using the plurality of frequency domain bandwidths.

In a possible design, when the second SCS is different from the first SCS, the common signaling further includes indication information of the second SCS.

In a possible design, the first frame includes a preamble sequence, the preamble sequence indicates that the first frame starts, the preamble sequence is the first information, the second frame includes downlink data, and the downlink data is the second information; and the determining a second frequency domain width based on the first information includes: determining, based on a correspondence between the preamble sequence and a frequency domain width, the second frequency domain width corresponding to the preamble sequence in the first frame; or determining, based on a correspondence between spreading code of the preamble sequence and a frequency domain width, the second frequency domain width corresponding to the spreading code of the preamble sequence in the first frame.

In the foregoing design, the second frequency domain width may be implicitly indicated by using the preamble sequence in the frame or the spreading code of the preamble sequence, and no additional control information needs to be added, thereby reducing signaling overheads.

In a possible design, when the first frame and the second frame are the same frame, the first frame further includes at least one of the following: the preamble sequence, located before the downlink data; a midamble, where the downlink data includes first downlink data and second downlink data, the midamble is included between the first downlink data and the second downlink data, and the midamble is used to maintain synchronization during downlink data transmission; or a postamble, located after the downlink data, where the postamble indicates that the first frame ends.

At least one of the midamble or the postamble is transmitted by using the second SCS and the second frequency domain width, or is transmitted by using the first SCS and the first frequency domain width.

In a possible design, the first frame includes control information, the control information is the first information, the second frame includes downlink data, the downlink data is the second information, and the control information includes indication information of the second frequency domain width.

In this design, a control part is added to a frame structure used by the downlink data, the control part is used to carry the control information, and the control information at least explicitly indicates the second frequency domain width used by the downlink data in the frame or another frame. In this way, the downlink data is transmitted by using a frequency domain bandwidth other than a fixed frequency domain bandwidth, thereby improving flexibility of transmitting the downlink data.

In a possible design, when the second SCS is different from the first SCS, the control information further includes indication information of the second SCS.

In a possible design, when the first frame and the second frame are the same frame, the first frame further includes at least one of the following: a preamble sequence, located before the downlink data, where the preamble sequence indicates that the first frame starts; a midamble, where the downlink data includes first downlink data and second downlink data, the midamble is included between the first downlink data and the second downlink data, the midamble is used to maintain synchronization during downlink data transmission, and the control information is located between the preamble sequence and the downlink data; or a postamble, located after the downlink data, where the postamble indicates that the first frame ends. The preamble sequence is transmitted by using the first SCS and the first frequency domain width, and at least one of the midamble and the postamble is transmitted by using the first SCS and the first frequency domain width, or is transmitted by using the second SCS and the second frequency domain width.

In a possible design, the second information includes first indication information, and the first indication information indicates the terminal to update the second frequency domain width. The method further includes: receiving a third frame from the network device based on the first SCS and the first frequency domain width, where the third frame includes the first information, and the first information includes indication information of a third frequency domain width; and receiving a fourth frame from the network device based on a third SCS and the third frequency domain width, where the fourth frame includes the second information, and the third SCS is the same as or different from the first SCS.

In this design, after the reader sends the downlink information to the tag by using the second frequency domain width and the second SCS, the reader may further send the downlink information to the tag by using another frequency domain width and another SCS. A specific manner includes: including, in the downlink data, indication information that indicates to update the frequency domain width. Subsequently, the tag jumps back to the first SCS and the first frequency domain width to receive the common signaling, and the common signaling may indicate a new frequency domain width, for example, the third frequency domain width. Then, the reader sends the downlink data to the tag by using the third frequency domain width and the third SCS.

In a possible design, when the third SCS is different from the first SCS, the first information further includes indication information of the third SCS.

In a possible design, the second information includes the indication information of the third SCS and/or the indication information of the third frequency domain width. The method further includes: receiving the third frame from the network device based on the third SCS and the third frequency domain width, where the third frame includes the second information.

In this design, the reader may directly include an indication of the new frequency domain width in the downlink data. Corresponding to the foregoing descriptions, the reader includes, in the downlink data, the indication information for updating the frequency domain width, and the tag needs to first jump back to the first SCS and the first frequency domain width to receive the common signaling, and then receives the new frequency domain width based on an indication of the common signaling. Therefore, overheads of the common signaling can be reduced.

In a possible design, the second information includes indication information of a fourth SCS and/or indication information of a fourth frequency domain width. The method further includes: receiving the third frame from the network device based on the fourth SCS and the fourth frequency domain width, where the third frame includes the first information.

In this design, the downlink data may carry the new frequency domain width and the indication information of the SCS, and the reader may send the common signaling to the tag based on the new frequency domain width and the SCS. Correspondingly, the tag may receive the common signaling from the reader based on the new frequency domain width and the SCS.

In a possible design, there is a correspondence between at least one of the first SCS and the first frequency domain width and a frequency band to which a frequency domain resource on which the first frame is transmitted belongs.

In a possible design, a center frequency of the frequency domain resource on which the first frame is transmitted is aligned with a center frequency of a frequency domain resource on which the second frame is transmitted; or the frequency domain resource on which the first frame is transmitted is any one of a plurality of non-overlapping frequency domain resources included in frequency domain resources for transmitting the second frame.

According to a second aspect, an information sending method is provided. The method corresponds to the network device in the first aspect. For beneficial effects, refer to the descriptions of the first aspect. The method may be performed by the network device, and the network device may be a reader. The method includes: sending a first frame to a terminal based on a first frequency domain width, where the first frame includes first information, and the first information is used to determine a second frequency domain width; and sending a second frame to the terminal based on the second frequency domain width, where the second frame includes second information, the second frequency domain width is used to determine transmission duration of one bit or symbol in the second information, and the second frame and the first frame are a same frame or different frames.

In a possible design, the sending a first frame to a terminal based on a first frequency domain width includes: sending the first frame to the terminal based on a first subcarrier spacing SCS and the first frequency domain width.

In a possible design, the sending a second frame to the terminal based on the second frequency domain width includes: sending the second frame to the terminal based on a second SCS and the second frequency domain width, where the second SCS is the same as or different from the first SCS.

In a possible design, there is a correspondence between the second SCS and the second frequency domain width. When the second SCS is 15 kHz, a value of the second frequency domain width is at least one of the following: 180 kHz, 360 kHz, 540 kHz, or 720 kHz; or when the second SCS is 30 kHz, a value of the second frequency domain width is at least one of the following: 360 kHz or 720 kHz.

In a possible design, the first information is common signaling. The common signaling includes indication information of the second frequency domain width, and the second information is downlink data.

In a possible design, when the second SCS is different from the first SCS, the common signaling further includes indication information of the second SCS.

In a possible design, the first frame includes a preamble sequence, the preamble sequence indicates that the first frame starts, the preamble sequence is the first information, the second frame includes downlink data, and the downlink data is the second information. There is a correspondence between the preamble sequence and a frequency domain width, and the preamble sequence in the first frame corresponds to the second frequency domain width; or there is a correspondence between spreading code of the preamble sequence and a frequency domain width, and the spreading code of the preamble sequence in the first frame corresponds to the second frequency domain width.

In a possible design, when the first frame and the second frame are the same frame, the first frame further includes at least one of the following: the preamble sequence, located before the downlink data; a midamble, where the downlink data includes first downlink data and second downlink data, the midamble is included between the first downlink data and the second downlink data, and the midamble is used to maintain synchronization during downlink data transmission; or a postamble, located after the downlink data, where the postamble indicates that the first frame ends. At least one of the midamble or the postamble is transmitted by using the second SCS and the second frequency domain width, or is transmitted by using the first SCS and the first frequency domain width.

In a possible design, the first frame includes control information, the control information is the first information, the second frame includes downlink data, the downlink data is the second information, and the control information includes indication information of the second frequency domain width.

In a possible design, when the second SCS is different from the first SCS, the control information further includes indication information of the second SCS.

In a possible design, when the first frame and the second frame are the same frame, the first frame further includes at least one of the following: a preamble sequence, located before the downlink data, where the preamble sequence indicates that the first frame starts; a midamble, where the downlink data includes first downlink data and second downlink data, the midamble is included between the first downlink data and the second downlink data, the midamble is used to maintain synchronization during downlink data transmission, and the control information is located between the preamble sequence and the downlink data; or a postamble, located after the downlink data, where the postamble indicates that the first frame ends. The preamble sequence is transmitted by using the first SCS and the first frequency domain width, and at least one of the midamble and the postamble is transmitted by using the first SCS and the first frequency domain width, or is transmitted by using the second SCS and the second frequency domain width.

In a possible design, the second information includes first indication information, and the first indication information indicates the terminal to update the second frequency domain width. The method further includes: sending a third frame to the terminal based on the first SCS and the first frequency domain width, where the third frame includes the first information, and the first information includes indication information of a third frequency domain width; and sending a fourth frame to the terminal based on a third SCS and the third frequency domain width, where the fourth frame includes the second information, and the third SCS is the same as or different from the first SCS.

In a possible design, when the third SCS is different from the first SCS, the first information further includes indication information of the third SCS.

In a possible design, the second information includes the indication information of the third SCS and/or the indication information of the third frequency domain width. The method further includes: sending the third frame to the terminal based on the third SCS and the third frequency domain width, where the third frame includes the second information.

In a possible design, the second information includes indication information of a fourth SCS and/or indication information of a fourth frequency domain width. The method further includes: sending the third frame to the terminal based on the fourth SCS and the fourth frequency domain width, where the third frame includes the first information.

In a possible design, there is a correspondence between at least one of the first SCS and the first frequency domain width and a frequency band to which a frequency domain resource on which the first frame is transmitted belongs.

In a possible design, a center frequency of the frequency domain resource on which the first frame is transmitted is aligned with a center frequency of a frequency domain resource on which the second frame is transmitted; or the frequency domain resource on which the first frame is transmitted is any one of a plurality of non-overlapping frequency domain resources included in frequency domain resources for transmitting the second frame.

In a possible design, the first frame is sent based on the first frequency domain width at a first power, and the second frame is sent based on the second frequency domain width at a second power. When the second frequency domain width is greater than the first frequency domain width, the second power is greater than the first power.

In this application, a transmit power of the reader increases as the frequency domain width increases. This helps maintain coverage.

According to a third aspect, an apparatus is provided. For beneficial effects, refer to the descriptions of the first aspect. The apparatus may be a terminal device, a module configured in a terminal device, or another apparatus having a function of a terminal device. In a design, the apparatus includes a unit for performing the method described in the first aspect. The unit may be a hardware circuit, or may be software, or may be implemented by a hardware circuit in combination with software. For example, the apparatus may include a processing unit and a transceiver unit, and the processing unit and the transceiver unit may perform corresponding functions in any design example of the first aspect.

Specifically, the transceiver unit is configured to receive a first frame from a network device based on a first frequency domain width, where the first frame includes first information.

The processing unit is configured to determine a second frequency domain width based on the first information.

The transceiver unit is further configured to receive a second frame from the network device based on the second frequency domain width, where the second frame includes second information, the second frequency domain width is used to determine transmission duration of one bit or symbol in the second information, and the second frame and the first frame are a same frame or different frames.

For specific execution processes of the transceiver unit and the processing unit, refer to the first aspect.

According to a fourth aspect, an apparatus is provided. For beneficial effects, refer to the descriptions of the first aspect. The apparatus includes a processor, configured to implement the method described in the first aspect. The apparatus may further include a memory, configured to store instructions and/or data. The memory is coupled to the processor. When executing program instructions stored in the memory, the processor may implement the method described in the first aspect. The apparatus may further include a communication interface, and the communication interface is used by the apparatus to communicate with another device. For example, the communication interface may be a transceiver, a circuit, a bus, a pin, or a communication interface of another type. In a possible design, the apparatus includes:
the memory, configured to store the program instructions;
the communication interface, configured to perform a function of the transceiver unit in the first aspect; and
the processor, configured to perform a function of the processing unit in the first aspect.

According to a fifth aspect, an apparatus is provided. For beneficial effects, refer to the descriptions of the second aspect. The apparatus may be a network device, a module configured in a network device, or another apparatus having a function of a network device. In a design, the apparatus includes a unit for performing the method described in the second aspect. The unit may be a hardware circuit, or may be software, or may be implemented by a hardware circuit in combination with software. For example, the apparatus may include a processing unit and a transceiver unit, and the processing unit and the transceiver unit may perform corresponding functions in any design example of the second aspect.

Specifically, the processing unit is configured to generate a first frame and a second frame.

The transceiver unit is configured to send the first frame to a terminal based on a first frequency domain width, where the first frame includes first information, and the first information is used to determine a second frequency domain width.

The transceiver unit is further configured to send the second frame to the terminal based on the second frequency domain width, where the second frame includes second information, the second frequency domain width is used to determine transmission duration of one bit or symbol in the second information, and the second frame and the first frame are a same frame or different frames.

For specific execution processes of the transceiver unit and the processing unit, refer to the second aspect.

According to a sixth aspect, an apparatus is provided. For beneficial effects, refer to the descriptions of the second aspect. The apparatus includes a processor, configured to implement the method described in the second aspect. The apparatus may further include a memory, configured to store instructions and/or data. The memory is coupled to the processor. When executing program instructions stored in the memory, the processor may implement the method described in the second aspect. The apparatus may further include a communication interface, and the communication interface is used by the apparatus to communicate with another device. For example, the communication interface may be a transceiver, a circuit, a bus, a pin, or a communication interface of another type. In a possible design, the apparatus includes:
the memory, configured to store the program instructions;
the communication interface, configured to perform a function of the transceiver unit in the second aspect; and
the processor, configured to perform a function of the processing unit in the second aspect.

According to a seventh aspect, an embodiment of this application further provides a computer-readable storage medium storing instructions. When the instructions are run on a communication apparatus, the communication apparatus is enabled to perform the method in the first aspect or the second aspect.

According to an eighth aspect, an embodiment of this application further provides a chip system. The chip system includes a processor, may further include a memory, and is configured to implement the method in the first aspect or the second aspect. The chip system may include a chip, or may include a chip and another discrete component.

According to a ninth aspect, an embodiment of this application further provides a computer program product, including instructions. When the instructions are run on a communication apparatus, the communication apparatus is enabled to perform the method in the first aspect or the second aspect.

According to a tenth aspect, an embodiment of this application further provides a system. The system includes the apparatus in the third aspect or the fourth aspect and the apparatus in the fifth aspect or the sixth aspect.

### BRIEF DESCRIPTION OF DRAWINGS

FIG. 1 is a diagram of a communication system according to this application;
FIG. 2 and FIG. 3 each are a diagram of a reader and a tag according to this application;
FIG. 4 is a diagram of a centralized control unit, a reader, and a tag according to this application;
FIG. 5 is a diagram of a signal class in an RFID process according to this application;
FIG. 6 is a diagram of inventory according to this application;
FIG. 7 is a schematic flowchart according to this application;
FIG. 8, FIG. 9, and FIG. 10 each are a diagram of a frame structure according to this application;
FIG. 11 is a diagram of a frequency domain resource for transmitting common signaling and downlink data according to this application;
FIG. 12 and FIG. 13 each are a diagram of a frequency domain width corresponding to updating downlink data according to this application;
FIG. 14 is a diagram of updating a frequency domain width corresponding to common signaling according to this application; and
FIG. 15 and FIG. 16 each are a diagram of an apparatus according to this application.

### DESCRIPTION OF EMBODIMENTS

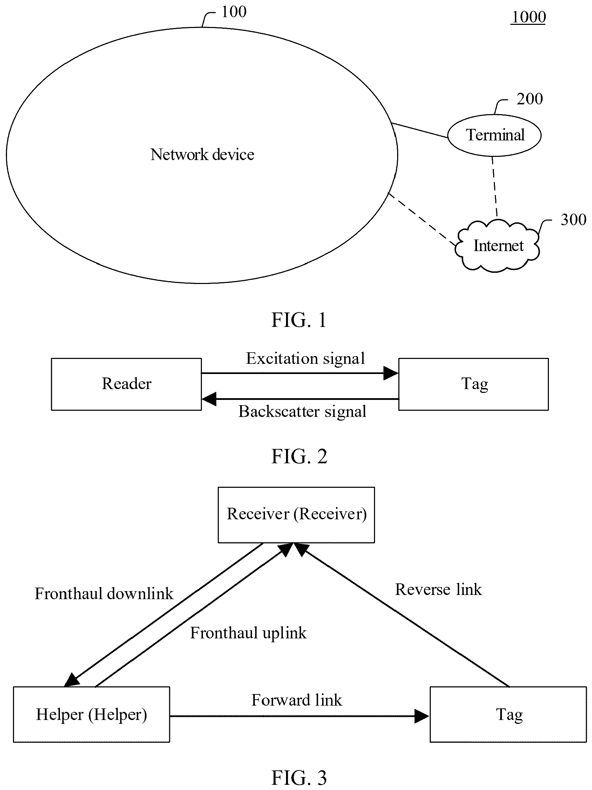

FIG. 1 is an architectural diagram of a communication system 1000 to which this application is applied. As shown in FIG. 1, the communication system includes a network device 100 and a terminal 200. Optionally, the communication system 1000 may further include an Internet 300. The network device 100 may be connected to the terminal 200 in a wireless manner, and different terminals 200 may be connected to each other in a wireless manner. FIG. 1 is merely a diagram. The communication system may further include another network device, for example, may further include an access network device, a relay device, and a wireless backhaul device, which are not shown in FIG. 1.

The network device may be a reader/writer, a reader (reader), or the like. A specific technology and a specific device form used by the network device are not limited in this application. For ease of description, the following uses an example in which the reader is used as the network device for description.

The terminal may be a tag (tag) or the like, and may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form used by the terminal are not limited in this application. For ease of description, the following uses an example in which the tag is used as the terminal for description.

The reader and the tag may be fixed or movable. The reader and the tag may be deployed on land, including an indoor device, an outdoor device, a handheld device, or a vehicle-mounted device; may be deployed on water; or may be deployed on an airplane, a balloon, and an artificial satellite in the air. An application scenario of the reader and the tag is not limited in this application.

Communication between the reader and the tag, readers, and tags may be performed by using a licensed spectrum, or may be performed by using an unlicensed spectrum, or may be performed by using both a licensed spectrum and an unlicensed spectrum; and may be performed by using a spectrum below 6 gigahertz (gigahertz, GHz), or may be performed by using a spectrum above 6 GHz, or may be performed by using a spectrum below 6 GHz and a spectrum above 6 GHz. A resource used for wireless communication is not limited in this application.

In this application, a function of the reader may be executed by a module (for example, a chip) in the reader, or may be executed by a control subsystem including a function of the reader. The control subsystem including the function of the reader herein may be a control center in the foregoing application scenarios, such as the smart grid, the industrial control, the smart transportation, and the smart city. A function of the tag may also be executed by a module (such as a chip or a modem) in the tag, or may be executed by an apparatus including a function of the tag.

The following uses the reader and the tag as an example to describe a principle and a working process of radio frequency identification (radio frequency identification, RFID).

The RFID technology is a non-contact automatic identification technology. The reader provides energy to the tag by sending an excitation signal to the tag. The tag receives the excitation signal sent by the reader, and sends information to the reader through a backscatter signal. In this manner, the reader may identify an identity (identification, ID) of the tag, and perform operations such as reading and writing on the tag. For a passive tag, the reader needs to provide the excitation signal, and some energy is used for internal processing such as encoding/decoding and modulation/demodulation of the tag, and the excitation signal is further used as a carrier for carrying uplink information of the tag for backscatter. For a semi-passive tag, a battery is included in the semi-passive tag, and processing such as encoding/decoding and modulation/demodulation may be performed by using the battery, but the reader still needs to send the excitation signal as a backscatter carrier. It should be noted that, the tag does not have its own carrier, and needs to borrow a downlink carrier as an uplink carrier for sending the excitation signal, and modulate uplink information of the tag on the carrier for transmission. For example, the tag may implement signal backscatter of different strengths by adjusting antenna impedance, to implement modulation of different bits.

In this application, the reader uses an integrated architecture (refer to FIG. 2) or a separated architecture (refer to FIG. 3). In the separated architecture, the reader is divided into two parts: a helper (helper) and a receiver (receiver). In the separated architecture, in downlink or forward transmission, the receiver is responsible for generating RFID-related signaling and sending the RFID-related signaling to the helper. The helper is responsible for forwarding the RFID signaling to the tag. In uplink or reverse transmission, the receiver is responsible for receiving the backscatter signal from the tag. In addition, the helper may alternatively send related information to the receiver.

Optionally, a 5th generation (5th generation, 5G) new radio (new radio, NR) technology or a 5G sidelink (sidelink, SL) technology may be used for transmission between the helper and the receiver. To be specific, the receiver generates the RFID signaling and may send the RFID signaling to the helper based on the 5G NR air interface technology or the 5G sidelink technology. The helper then forwards the RFID signaling to the tag.

In this application, a link over which the reader transmits information to the tag may be referred to as a forward link or a downlink. A link over which the tag transmits information to the reader may be referred to as a reverse link or an uplink. In the separated architecture of the reader, the reader is divided into the helper and the receiver. As shown in FIG. 3, because the helper is responsible for sending the RFID signaling to the tag, the link over which the helper and the tag transmit information may be referred to as the forward link or the downlink. Because the receiver is responsible for receiving the backscatter signal from the tag, the link between the tag and the receiver to transmit information may be referred to as the reverse link or the uplink. A link over which the receiver sends a signal to the helper may be referred to as a fronthaul downlink. A link over which the helper sends information to the receiver may be referred to as a fronthaul uplink.

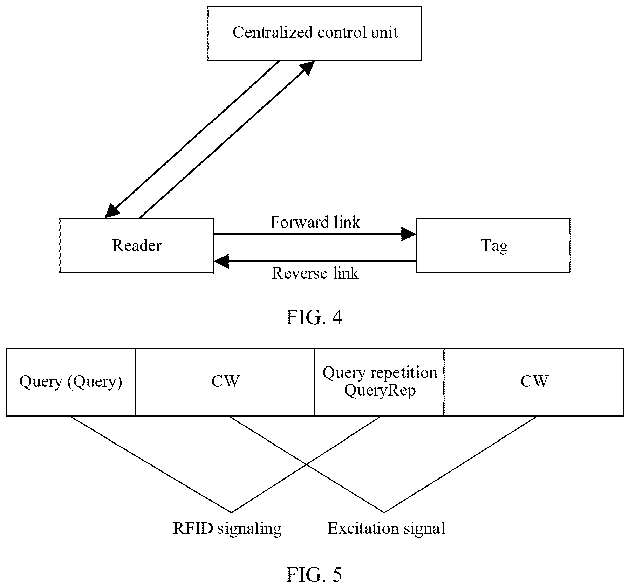

In the foregoing centralized or integrated architecture, in addition to activating and backscattering signals between the reader and the tag over the forward link and the reverse link, as shown in FIG. 4, the reader further communicates with a centralized control unit. The centralized control unit may schedule and control a resource, a sending behavior, and the like of the forward link. The centralized control unit may be a base station or the like. The 5G NR air interface technology, the 5G sidelink technology, or the like is used for communication between the base station and the reader.

As shown in FIG. 5, signals transmitted between the reader and the tag over the forward link or the downlink are classified into two types: one type is the excitation signal, where the excitation signal is a continuous wave (continuous wave, CW); and the other type is the RFID signaling, where the RFID signaling includes query (query) signaling, query repetition (query repetition, QueryRep) signaling, and the like.

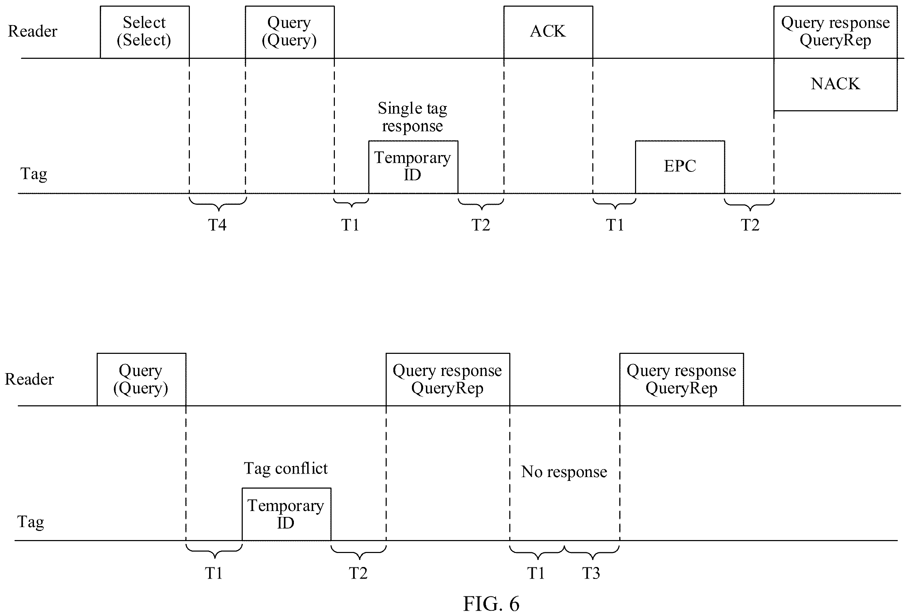

An inventory process is used as an example to describe a communication process between the reader and the tag. The inventory is a process of counting, checking, or inventorying objects (including items, load compartments, or pallets) in an internet of things. For example, a warehouse stores various types of products, each product includes a corresponding tag, and the tag stores an electronic product code (electronic product code, EPC) corresponding to the product. The EPC may globally uniquely identify an object in a supply chain. When a product in the warehouse needs to be counted, the reader may send inventory signaling, the tag attempts to respond, and the tag that responds successfully continues to report the EPC of the corresponding product to the reader. The reader may implement inventory of products in the warehouse based on the received EPC fed back by the tag. As shown in FIG. 6, the inventory process includes at least the following steps.
1. The reader performs a query (select) process: selecting a tag subset, where the tag subset includes at least one tag. Optionally, a same tag subset identifier may be pre-allocated to tags belonging to a same tag subset.
2. The reader sends query (query) signaling to the tag, where the query signaling includes an identifier corresponding to the tag subset.
3. When the tag receives the query signaling, if the tag finds that the identifier of the tag subset carried in the query signaling is the same as the identifier of the tag subset pre-allocated to the tag, the tag selects a 16-bit random number as a temporary ID, and sends the temporary ID to the reader, where the temporary ID may be carried in the RN 16.
4. The reader sends acknowledgment (acknowledgment, ACK) signaling to the tag, where the signaling includes the temporary ID, that is, the 16-bit random number, previously fed back by the tag, as an acknowledgment of the feedback of the tag.
5. After receiving the ACK signaling, if the tag determines that the ACK signaling includes the temporary ID of the tag, the tag sends an EPC of a corresponding object to the reader. Optionally, a complete EPC or a part of the EPC may be sent. Alternatively, the reader may send an ID other than the EPC to the tag, which is not limited.
6. If the reader finds that the EPC reported by the tag is invalid, the reader feeds back a negative acknowledgment (negative acknowledgment, NAK) to the tag; or the reader may no longer send a NAK to the tag, but directly send the QueryRep to indicate the tag to skip the current inventory process and directly perform a subsequent inventory process.

It should be noted that, in the foregoing process:
1. When the reader detects a temporary ID fed back by a single tag, it indicates that the inventory is normal, and the subsequent operation is continued based on the process in FIG. 6.
2. When the reader cannot resolve temporary IDs fed back by a plurality of tags, it indicates that a tag conflict occurs. The reader may directly send the QueryRep to the tag, indicating to skip conflicting tags and directly proceed to the subsequent inventory process.
3. When the reader detects no temporary ID fed back by the tag, the reader directly performs the subsequent inventory process.

Time intervals in FIG. 6 are described as follows: T1 is a time interval between time at which the reader ends sending signaling and time at which the tag starts sending signaling. T2 is a time interval between time at which the reader sends signaling and time at which next signaling starts. T3 is an extra delay that needs to be waited when there is no tag feedback for reader inventory. T2 is a time interval between time at which the tag ends sending signaling and time at which the reader starts sending signaling.

In this application, the reader may send downlink information such as the Query and the QueryRep to the tag over the downlink or the reverse link. The reader may share physical resources with a cellular technology and support a subcarrier spacing of 15 kHz by using a new or enhanced radio frequency identification technology. However, currently, in a licensed spectrum resource used in the cellular technology, a fixed 180 kHz is allocated to the new or enhanced radio frequency identification technology for use, and the reader can send the downlink information to the tag by using only a fixed frequency domain width of 180 kHz. How to improve flexibility of a frequency domain width occupied by the downlink information in this technology is a technical problem to be resolved in this application.

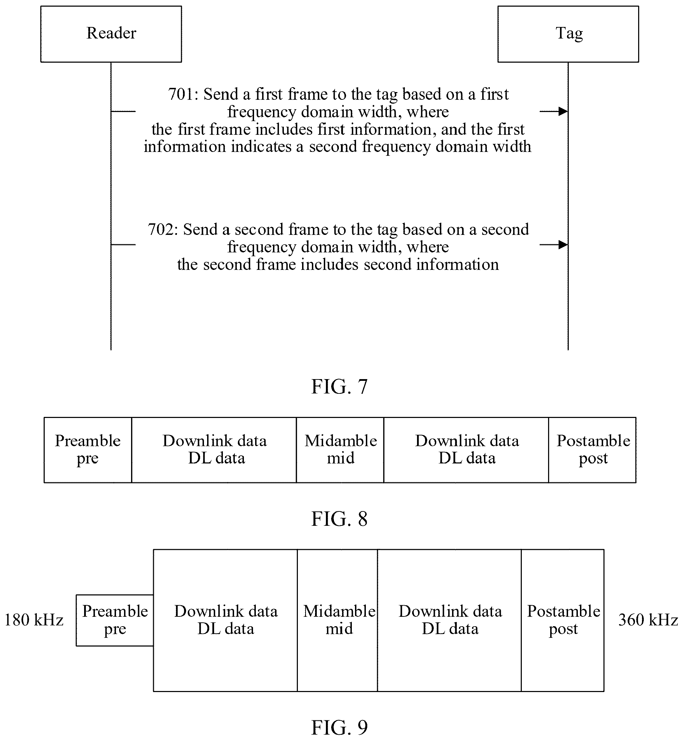

As shown in FIG. 7, a process of an information receiving method and an information sending method is provided. In the method, a reader may first send a first frame including first information to a tag based on a fixed frequency domain width, for example, a first frequency domain width. The first information explicitly or implicitly indicates a second frequency domain width to the tag. Then the reader sends a second frame including second information to the tag based on the second frequency domain width. According to the method of this application, the reader may transmit downlink information to the tag by using different frequency domain widths. Especially, when the second frequency domain width is greater than the first frequency domain width, a transmission rate of the downlink information may be further increased. The process includes at least the following steps.

Step 701: The reader sends the first frame to the tag based on the first frequency domain width, and correspondingly, the tag receives the first frame from the reader based on the first frequency domain width, where the first frame includes the first information, and the first information is used to determine the second frequency domain width. The tag determines the second frequency domain width based on the first information.

Further, the reader may send the first frame to the tag based on a first subcarrier spacing (subcarrier spacing, SCS) and the first frequency domain width. Correspondingly, the tag may receive the first frame from the reader based on the first SCS and the first frequency domain width. The first SCS is a fixed SCS, for example, the first SCS is fixed at 15 kHz. The first frequency domain width is a fixed frequency domain width, for example, the first frequency domain width may be fixed at 180 kHz.

In a design, there is a correspondence between at least one of the first SCS and the first frequency domain width and a frequency band to which a frequency domain resource on which the first frame is transmitted belongs. The reader and the tag may determine the first SCS and the first frequency domain width based on the frequency band to which the frequency domain resource on which the first frame is transmitted belongs. For example, for a frequency band A, the first SCS is 15 kHz, and the first frequency domain width is 180 kHz. For a frequency band B, the first SCS is 30 kHz, and the first frequency domain width is 360 kHz.

Alternatively, a plurality of SCSs and frequency domain widths may be supported for a same frequency band. For example, for a frequency band C, the first SCS of 15 kHz and the first frequency domain width of 180 kHz are supported, and the first SCS of 30 kHz and the first frequency domain width of 360 kHz are also supported. The reader may select either of the first SCS and the first frequency domain width to send the first frame, and the tag needs to attempt to receive the first frame based on the two SCSs and frequency domain widths. In a manner, once the reader selects an SCS and a frequency domain width to send the first frame, the SCS and the frequency domain width are not changed when the first frame is subsequently transmitted. When receiving the first frame for the first time, the tag needs to attempt to receive the first frame based on the two SCSs and frequency domain widths. Once the first frame is successfully received by using the SCS and the frequency domain width, the tag always receives the first frame by using the SCS and the frequency domain width subsequently. In another manner, each time the reader sends the first frame, the reader reselects the first SCS and the first frequency domain width. In other words, the first SCS and the first frequency domain width used to send the first frame each time may be different. Each time the tag receives the first frame, the tag needs to attempt to receive the first frame based on two different SCSs and frequency domain widths.

Step 702: The reader sends the second frame to the tag based on the second frequency domain width, and correspondingly, the tag receives the second frame from the reader based on the second frequency domain width, where the second frame and the first frame are a same frame or different frames, and the second frequency domain width is the same as or different from the first frequency domain width.

Further, the reader may send the second frame to the tag based on the second SCS and the second frequency domain width. Correspondingly, the tag may receive the second frame from the reader based on the second SCS and the second frequency domain width. The second SCS is the same as or different from the first SCS. For example, when the second SCS and the first SCS are both fixed at 15 kHz, the reader may send the first frame to the tag based on the SCS of 15 kHz and the frequency domain width of 180 kHz, where the first frame includes the first information. The first information may explicitly or implicitly indicate a value of the second frequency domain width. The reader may send the second frame to the tag based on the SCS of 15 kHz and the second frequency domain bandwidth. Alternatively, when the second SCS is different from the first SCS, the first information may further explicitly or implicitly indicate a value of the second SCS. For an implementation in which the first information indicates the second frequency domain width and the second SCS, refer to the following descriptions.

In this application, in the foregoing step 701 or step 702, the tag may determine a location and/or a length of a cyclic prefix (cyclic prefix, CP) in the first frame based on the first SCS, and similarly, may determine a location and/or a length of a CP in the second frame based on the second SCS. The CP may be a normal cyclic prefix, an extended cyclic prefix, or the like. A location, a length, and the like of a CP in a corresponding frame are determined, and information carried in the corresponding frame, for example, a preamble, a midamble, or a postamble, may be detected. The tag may determine transmission duration or a time domain length of one symbol or bit in the second information in the first frame based on the first frequency domain width. Similarly, the tag may determine transmission duration or a time domain length of one symbol or bit in the first information in the second frame based on the second frequency domain width. The bit may be an encoded bit. When the transmission duration or the time domain length of one symbol or bit in the corresponding information in the corresponding frame is determined, the information carried in the corresponding frame may be detected, a downlink data symbol may be demodulated, and the like. Optionally, in this application, the frequency domain width may also be referred to as a channel bandwidth.

In this application, there may be a correspondence between the second SCS and the second frequency domain width. For example, when the second SCS is 15 kHz, the value of the second frequency domain width is at least one of the following: 180 kHz, 360 kHz, 540 kHz, or 720 kHz; or when the second SCS is 30 kHz, the value of the second frequency domain width is at least one of the following: 360 kHz or 720 kHz. In the foregoing descriptions, when the second SCS is different from the first SCS, the first information in the first frame may further indicate the value of the second SCS. In this design, when there is the correspondence between the second SCS and the second frequency domain width, especially when the correspondence is a one-to-one correspondence, even if the second SCS is different from the first SCS, the second SCS does not need to be indicated, and the reader only needs to indicate the second frequency domain width. After obtaining the second frequency domain width, the tag may obtain the value of the second SCS based on the correspondence between the frequency domain width and the SCS. For example, when the second frequency domain width is 720 kHz, the second SCS corresponding to the second frequency domain width is 30 kHz. However, when the correspondence between the SCS and the frequency domain width is not the one-to-one correspondence, a plurality of values of the SCS may be obtained based on the value of the second frequency domain width. In this case, the reader may need to additionally indicate the value of the second SCS. Alternatively, the reader may not indicate the value of the second SCS. The tag may need to detect the second frame based on the SCS that has the correspondence, until the detection succeeds.

In a current solution, downlink transmission between the reader and the tag uses a fixed SCS of 15 kHz and a fixed frequency domain width of 180 kHz. In this design, different SCSs and different frequency domain widths may be supported between the reader and the tag, so that a downlink transmission mechanism is more flexible.

In this application, the correspondence between the second SCS and the second frequency domain width may be specified in a protocol, or may be configured by a base station or another control device for the reader. When the reader determines to use the SCS of 15 kHz to send the downlink information to the tag, the reader may select any frequency domain width of 180 kHz, 360 kHz, 540 kHz, or 720 kHz to send the downlink information. Similarly, when the reader determines to use the SCS of 30 kHz to send the downlink information to the tag, the reader may select any frequency domain width of 360 kHz or 720 kHz to send the downlink information to the tag.

This application provides the following three designs for how the reader sends the first information and the second information to the tag.

In a first design, the first information is common signaling, and the common signaling includes select, query, or other common signaling. The other common signaling includes common signaling other than select and query in the current RFID technology, newly defined common signaling, and the like. The common signaling includes indication information of the second frequency domain width, and the second information is downlink data. Optionally, when the second SCS is different from the first SCS, the common signaling may further include indication information of the second SCS.

For example, the reader first sends the common signaling to the tag, where the common signaling is sent by using a fixed first SCS (for example, 15 kHz) and a fixed first frequency domain width (for example, 180 kHz). The common signaling includes indication information of a second frequency domain width to be used for subsequently transmitting downlink data. In a subsequent downlink transmission, the reader sends the downlink data to the tag by using the second frequency domain width. For the tag, when obtaining no second frequency domain width, the tag attempts to receive the common signaling based on the fixed first SCS and the fixed first frequency domain width, and obtains the second frequency domain width in the common signaling. Then, subsequent downlink data is received based on the fixed first SCS and the second frequency domain width indicated in the common signaling. Alternatively, an SCS used for subsequent downlink transmission may be different from the fixed SCS used for the common signaling. For example, the SCS is fixed at 15 kHz, and an SCS of 30 kHz may be used for the subsequent downlink transmission. In this case, the common signaling further needs to indicate the second SCS used for the subsequent downlink transmission.

In the first design, only a small quantity of pieces of common signaling are transmitted by using the fixed frequency domain width, and subsequently a large quantity of pieces of downlink data are transmitted by using the indicated second frequency domain width. When the second frequency domain width is greater than the fixed frequency domain width, that is, in this case, more frequency domain resources are used to transmit the downlink data, so that a transmission delay may be reduced, and a transmission rate may be increased.

To facilitate understanding of the following two designs, a frame structure used in downlink transmission between the reader and the tag is first described. As shown in FIG. 8, the frame structure includes at least one of the following:

Preamble (preamble, pre): The preamble indicates a start of a frame. Optionally, the preamble may also be referred to as a preamble sequence.

Downlink data (downlink data, DL data).

Midamble (midamble, mid): The midamble may be inserted when the downlink data is long, and is used to maintain synchronization during transmission. It should be noted that in this application, an example in which the downlink data is divided into two parts and the midamble is inserted between the two parts of the downlink data is used for description. This is not limited.

Postamble (postamble, post): The postamble indicates an end of the frame.

In a second design, the first frame includes the preamble sequence, the preamble sequence indicates that the first frame starts, the preamble sequence is the first information, the second frame includes downlink data, and the downlink data is the second information.

There is a correspondence between the preamble sequence and a frequency domain width. A process in which the tag determines the second frequency domain width based on the first information includes: The tag determines the second frequency domain width corresponding to the preamble sequence in the first frame based on the correspondence between the preamble sequence and the frequency domain width. For example, when the preamble sequence is A1, a corresponding frequency domain width is B 1. When the preamble sequence is A2, a corresponding frequency domain width may be B2.

Alternatively, there is a correspondence between spreading code of the preamble sequence and a frequency domain width. A process in which the tag determines the second frequency domain width based on the first information includes: The tag determines the second frequency domain width corresponding to the spreading code of the preamble sequence in the first frame based on the correspondence between the spreading code of the preamble sequence and the frequency domain width. The spreading code may also be referred to as a mask (mask). In other words, in this design, different frequency domain widths may be indicated by using different spreading code carried in the preamble sequence. For example, when the spreading code of the preamble sequence is F1, a corresponding frequency domain width is B3. When the spreading code of the preamble sequence is F2, a corresponding frequency domain width is B4.

It should be noted that in the foregoing descriptions, an example in which the preamble sequence or the spreading code carried in the preamble sequence indicates the second frequency domain width is used for description, and this is not limited thereto. The preamble sequence or the spreading code of the preamble sequence may further indicate the second SCS. For example, if a correspondence between the preamble sequence and the SCS is pre-designed or pre-configured, different preamble sequences indicate different SCSs. Alternatively, if there is a correspondence between the spreading code of the preamble sequence and the SCS, spreading code of the different preamble sequences indicates different SCSs. Alternatively, in this application, the preamble sequence or the spreading code carried in the preamble sequence may indicate both the frequency domain width and the SCS. For example, there is a correspondence between the preamble sequence and each of the frequency domain width and the SCS, and different preamble sequences may indicate different frequency domain widths and SCSs. For example, when the preamble sequence is A3, it may indicate that the frequency domain width is 360 kHz, the SCS is 30 kHz, and the like. A process of indicating both the frequency domain width and the SCS by using the spreading code carried in the preamble sequence is similar to the foregoing process, and details are not described again. Alternatively, in this application, the reader may indicate a size of the second frequency domain width or a size of the second SCS to the tag. In a specific indication manner, the preamble sequence or the spreading code of the preamble sequence in the second design, or control information in the following third manner may be included. There is a correspondence between the second frequency domain width and the second SCS, and the correspondence may be specified in a protocol, or may be pre-configured by the reader for the tag. In a manner, the reader may indicate the size of the second frequency domain width to the tag. When obtaining the size of the second frequency domain width, the tag obtains the second SCS corresponding to the second frequency domain width based on the correspondence between the frequency domain width and the SCS. Alternatively, the reader may indicate the size of the second SCS to the tag. When obtaining the size of the second SCS, the tag obtains the second frequency domain width corresponding to the second SCS based on the correspondence between the frequency domain width and the SCS.

In a second design, when the first frame and the second frame are a same frame, the first frame further includes at least one of the following; or it is described as follows: in this design, in addition to the preamble sequence and the downlink data in the frame structure, and the preamble sequence located before the downlink data, the frame structure may further include at least one of the following:
Midamble: The midamble is inserted between different downlink data, and is used to maintain synchronous transmission of the downlink data. For example, the downlink data includes first downlink data and second downlink data, and the midamble is inserted between the first downlink data and the second downlink data.
Postamble: The postamble is located after the downlink data.

It can be learned from the foregoing descriptions that, in the frame structure, the preamble sequence is transmitted by using the first SCS and the first frequency domain width, and the downlink data is transmitted by using the second SCS and the second frequency domain width. At least one of the midamble and the postamble may be transmitted by using the second SCS and the second frequency domain width, or may be transmitted by using the first SCS and the first frequency domain width. This is not limited. For example, as shown in FIG. 9, the first frequency domain width is 180 kHz, the second frequency domain width is 360 kHz, the preamble sequence is transmitted by using 180 kHz, and the downlink data, the midamble, and the postamble are transmitted by using 360 kHz.

For example, when the first frame and the second frame are a same frame, the reader sends the preamble sequence based on a fixed first SCS (for example, 15 kHz) and a fixed first frequency domain width (for example, 180 kHz), where the preamble sequence may indicate a second frequency domain width and/or a second SCS of a signal or data (for example, the downlink data, the midamble, and the postamble) in subsequent downlink transmission in the frame. The subsequent downlink data, midamble, postamble, and the like in the frame may be sent based on the second frequency domain width and the second SCS. Specifically, different preamble sequences may indicate different parameters, and the parameters correspond to the second frequency domain width and/or the second SCS. Alternatively, the preamble sequence carries different spreading code or masks, and different parameters or the like may be indicated by using different code. For the tag, the tag always detects a preamble sequence in each frame based on the fixed first SCS and the fixed first frequency domain width, obtains a second frequency domain width and/or a second SCS of a subsequent signal or data in the frame by using the preamble sequence, and detects or demodulates the subsequent signal or data in the frame based on the second SCS and the second frequency domain width.

In the second design, the preamble sequence is sent based on a fixed frequency domain width, which helps reduce complexity of detecting the preamble sequence by the tag. Remaining signals and data in the frame are transmitted by using the second frequency domain width indicated by the preamble sequence. Especially, when the second frequency domain width is greater than the fixed frequency domain width, a transmission delay of downlink information may be reduced, and an inventory speed may be increased.

In this application, the preamble sequence in each frame may be sent by the reader to the tag based on the foregoing frame structure, or a preamble sequence in part of frames may be sent based on the foregoing frame structure. For example, the reader sends the first frame to the tag based on the fixed first SCS and the fixed first frequency domain width, where the preamble sequence in the first frame indicates the second frequency domain width and/or the second SCS. Subsequently, the reader sends the second frame to an N^{th} frame based on the second SCS and the second frequency domain width. In an (N+1)^{th} frame, the reader expects to change the second frequency domain width to a third frequency domain width, and/or change the second SCS to a third SCS. The reader may send the (N+1)^{th} frame to the tag based on the fixed frequency domain width and the fixed SCS, where a preamble sequence of the (N+1)^{th} frame may indicate the third frequency domain width and/or the third SCS. The reader sends an (N+2)^{th} frame, an (N+3)^{th} frame, and the like to the tag based on the third frequency domain width and/or the third SCS. Certainly, the descriptions are described in a unit of frame.

In a third design, the first frame includes control information, the control information is the first information, the second frame includes downlink data, the downlink data is the second information, and the control information includes indication information of the second frequency domain width. Optionally, when the second SCS is different from the first SCS, the control information further includes the indication information of the second SCS.

In this design, when the first frame is the same as the second frame, the first frame further includes at least one of the following; or it is described as follows: In addition to the control information and the downlink data, the frame structure may further include at least one of the following:
a preamble sequence, located before the downlink data, where the preamble sequence indicates that the first frame starts;
a midamble, where the downlink data includes first downlink data and second downlink data, the midamble is inserted between the first downlink data and the second downlink data, the midamble is used to maintain synchronization in downlink data transmission, and the control information is located between the preamble sequence and the downlink data; and
a postamble, located after the downlink data, where the postamble indicates that the first frame ends.

The preamble sequence is transmitted by using the first SCS and the first frequency domain width, and at least one of the midamble and the postamble is transmitted by using the first SCS and the first frequency domain width, or is transmitted by using the second SCS and the second frequency domain width.

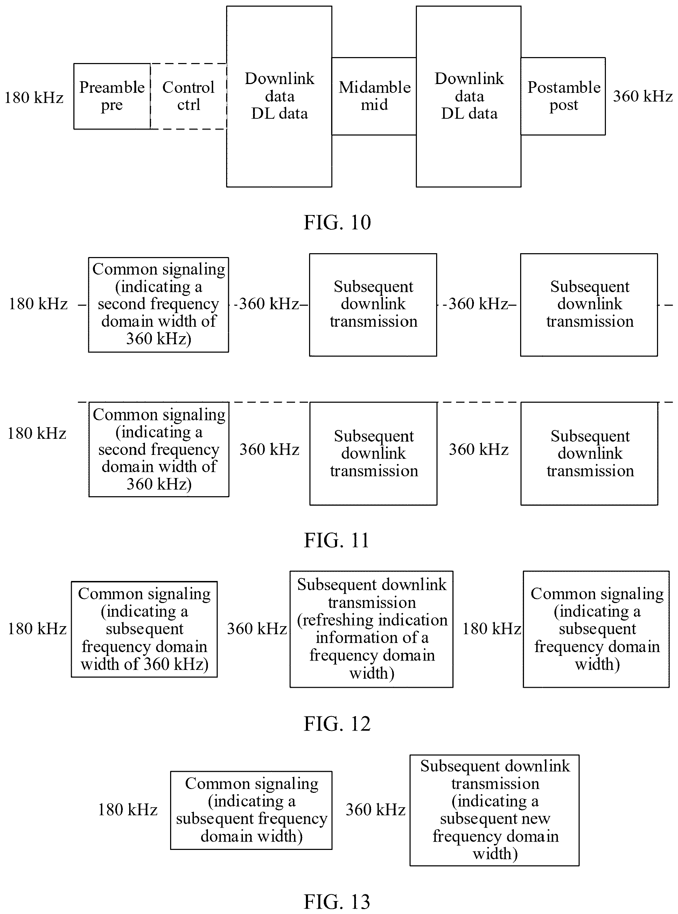

For example, as shown in FIG. 10, when the first frequency domain width is 180 kHz, and the second frequency domain width is 360 kHz, the preamble sequence, the control information, the midamble, and the postamble may be transmitted by using 180 kHz, and the downlink data may be transmitted by using 360 kHz. The tag detects the preamble, the control information, the midamble, and the postamble based on fixed 180 kHz, and detects the downlink data based on fixed 360 kHz. In this design, the preamble sequence, the control information, the midamble, and the postamble are all sent based on a fixed frequency domain width, so that complexity of detecting the preamble sequence, the control information, the midamble, and the postamble by the tag may be reduced. When the downlink data is transmitted by using the second frequency domain width, and the second frequency domain width is greater than the fixed frequency domain width, a transmission delay may be reduced, and an inventory rate may be increased.

It can be learned from the foregoing descriptions that the reader sends the first frame to the tag based on the first SCS and the first frequency domain width, and sends the second frame to the tag based on the second SCS and the second frequency domain width. The first frame and the second frame may be a same frame or different frames. In the first design, the first information included in the first frame is the common signaling, the second information included in the second frame is the downlink data, and the first frame and the second frame are different frames. Specifically, the first frame is a frame for transmitting the common signaling, and the second frame is a frame for transmitting the downlink data. However, in the second design and the third design, the first frame and the second frame may be the same frame, the first information is the preamble sequence or the control information in the same frame, and the second information is the downlink data in the same frame.

The first frequency domain width is the same as or different from the second frequency domain width. When the second frequency domain width is greater than the first frequency domain width, a first power at which the reader sends the first frame is greater than a second power at which the reader sends the second frame. For example, a transmit power of sending different frames by the reader increases as the frequency domain width increases. In a design, when the reader sends the first frame based on the frequency domain width of 180 kHz, a power of sending the first frame is x mW/y dBm. When the reader sends the second frame based on the frequency domain width of 360 kHz, a power of sending the second frame is 2x mW/(y+3) dBm. Alternatively, a coefficient α may be considered. When the reader sends the first frame based on the frequency domain width of 180 kHz, a power of sending the first frame is x mW. When the reader sends the second frame based on the frequency domain width of 360 kHz, a power of sending the second frame is 2αx mW. In this application, the transmit power of the reader increases as the frequency domain width increases. This helps maintain coverage.

In this application, a center frequency of a frequency domain resource on which the first frame is transmitted is aligned with a center frequency of a frequency domain resource on which the second frame is transmitted. For example, as shown in the first figure in FIG. 11, the first frequency domain width is 180 kHz, and the second frequency domain width is 360 kHz. The center frequency of the frequency domain resource on which the first frame is transmitted including the common signaling is aligned with the center frequency of the frequency domain resource on which the second frame is transmitted including the downlink data. Alternatively, the frequency domain resource on which the first frame is transmitted is any one of a plurality of non-overlapping frequency domain resources included in frequency domain resources for transmitting the second frame. For example, as shown in the second figure in FIG. 11, the first frequency domain width is 180 kHz, and the second frequency domain width is 360 kHz. The frequency domain resource on which the second frame is transmitted including the downlink data is 360 kHz in total, and is divided into two frequency domain resources of 180 kHz. The frequency domain resource on which the first frame is transmitted including the common signaling occupies one of the two frequency resources of 180 kHz.

In this application, when sending the first frame based on the first SCS and the first frequency domain width, and sending the second frame based on the second SCS and the second frequency domain width, the reader may further refresh an SCS and a frequency domain width of a subsequent sent frame, which may be respectively referred to as a third SCS and a third frequency domain width.

For example, the foregoing second frame may include first indication information, and the first indication information indicates the tag to update the second frequency domain width. When obtaining the first indication information, the tag may receive a third frame from the reader based on the first SCS and the first frequency domain width again, where the third frame includes the first information, and the first information includes indication information of the third frequency domain width. Subsequently, the tag receives a fourth frame from the reader based on the third frequency domain width and the third SCS, where the fourth frame includes the second information. The third SCS is the same as or different from the first SCS. Especially, when the third SCS is different from the first SCS, the third frame further includes indication information of the third SCS.

For example, an example in which the first information is the common signaling and the second information is the downlink data is used for description. As shown in FIG. 12, the reader sends the common signaling to the tag based on a frequency domain width of 180 kHz, where the common signaling includes indication information of 360 kHz. The reader subsequently sends the downlink data to the tag based on 360 kHz, where the downlink data includes refreshed indication information of a frequency domain width for downlink data transmission. When obtaining the indication information of the frequency domain width, the tag jumps back to 180 kHz to receive the common signaling. The common signaling may carry a new frequency domain width. For example, the new frequency domain width may be 540 kHz. The tag subsequently receives the downlink data based on the new frequency domain width.

Alternatively, the second information includes the indication information of the third SCS and/or indication information of the third frequency domain width, and the tag may receive the third frame from the reader based on the third SCS and the third frequency domain width, where the third frame includes the second information.

A difference between this manner and the foregoing manner lies in that the second information in the second frame directly indicates the third SCS and/or the third frequency domain width. In comparison with the foregoing manner, the second information in the second frame carries an update indication, the tag needs to jump back to the first SCS and the second frequency domain width to receive the third frame, and the third frame indicates the third SCS and/or the third frequency domain width. This may reduce signaling overheads and simplify a processing procedure.

For example, the first information is the common signaling, the second information is the downlink data, the first frequency domain width is 180 kHz, and the second frequency domain width is 360 kHz. As shown in FIG. 13, the reader sends the common signaling to the tag based on a frequency domain width of 180 kHz, where the common signaling carries indication information of 360 kHz. The reader sends downlink data to the tag based on a frequency domain width of 360 kHz, where the downlink data carries indication information of a new frequency domain width to indicate a frequency domain width used for subsequently transmitting the downlink data.

Alternatively, the reader sends the common signaling based on a fixed frequency domain width of 180 kHz only before each round of inventory. At other times, the reader sends the common signaling or the downlink data based on the frequency domain width of 360 kHz. Only before each round of inventory or after previous round of tag inventory succeeds, the tag attempts to receive the common signaling by using the fixed frequency domain width of 180 kHz. At other times, the tag receives the common signaling or the downlink data based on the frequency domain width of 360 kHz.

In addition, in this application, the fixed first frequency domain width and the fixed first SCS may be further updated. In this design, the second information includes indication information of a fourth SCS and/or indication information of a fourth frequency domain width, and the tag may receive the third frame from the reader based on the fourth SCS and the fourth frequency domain width, where the third frame includes the first information.

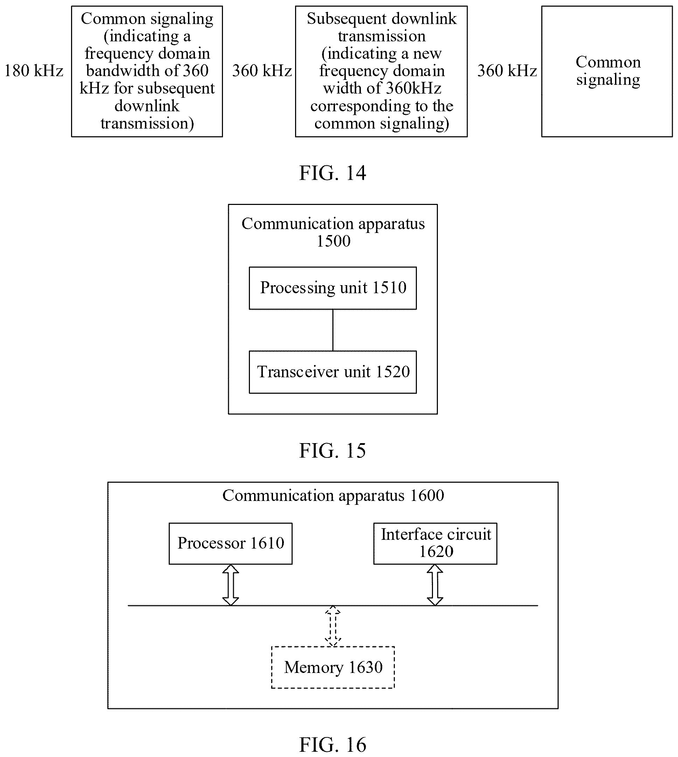

For example, the first information is the common signaling, the second information is the downlink data, the first frequency domain width is 180 kHz, and the second frequency domain width is 360 kHz. As shown in FIG. 14, the reader may send the common signaling to the tag based on 180 kHz, where the common signaling carries indication information of 360 kHz corresponding to subsequent downlink data. The reader subsequently sends the downlink data to the tag based on 360 kHz, where the downlink data may carry indication information of a new frequency domain width corresponding to the common signaling, for example, the new frequency domain width may be 360 kHz. Subsequently, the tag may receive the common signaling from the reader based on the new frequency domain width of 360 kHz.

According to the foregoing design, the frequency domain width and the SCS for transmitting the common signaling may be flexibly adjusted.

It may be understood that, to implement the functions in the foregoing embodiments, the reader and the tag include corresponding hardware structures and/or software modules for performing the functions. A person skilled in the art should be easily aware that, in this application, the units and method steps in the examples described with reference to embodiments disclosed in this application may be implemented by hardware or a combination of hardware and computer software. Whether a function is performed by hardware or hardware driven by computer software depends on particular application scenarios and design constraint conditions of the technical solutions.

FIG. 15 and FIG. 16 each are a diagram of a structure of a possible communication apparatus according to embodiments of this application. These communication apparatuses may be configured to implement functions of the tag or the reader in the foregoing method embodiments, and therefore may also implement beneficial effects of the foregoing method embodiments. In embodiments of this application, the communication apparatus may be the tag or the reader shown in FIG. 1, or may be a module (for example, a chip) used in the tag or the reader.

As shown in FIG. 15, the communication apparatus 1500 includes a processing unit 1510 and a transceiver unit 1520. The communication apparatus 1500 is configured to implement a function of the tag or the reader in the method embodiment shown in FIG. 7.

When the communication apparatus 1500 is configured to implement the function of the tag in the method embodiment shown in FIG. 7, the transceiver unit 1520 is configured to receive a first frame from a network device based on a first frequency domain width, where the first frame includes first information; and the processing unit 1510 is configured to determine a second frequency domain width based on the first information. The transceiver unit 1520 is further configured to receive a second frame from the network device based on the second frequency domain width, where the second frame includes second information, the second frequency domain width is used to determine transmission duration of one bit or symbol in the second information, and the second frame and the first frame are a same frame or different frames.

When the communication apparatus 1500 is configured to implement the function of the reader in the method embodiment shown in FIG. 7, the processing unit 1510 is configured to generate a first frame and a second frame; and the transceiver unit 1520 is configured to send the first frame to a terminal based on a first frequency domain width, where the first frame includes first information, and the first information is used to determine a second frequency domain width. The transceiver unit 1520 is further configured to send the second frame to the terminal based on the second frequency domain width, where the second frame includes second information, the second frequency domain width is used to determine transmission duration of one bit or symbol in the second information, and the second frame and the first frame are a same frame or different frames.

For more detailed descriptions of the processing unit 1510 and the transceiver unit 1520, directly refer to the related descriptions in the method embodiment shown in FIG. 7. Details are not described herein.

As shown in FIG. 16, the communication apparatus 1600 includes a processor 1610 and an interface circuit 1620. The processor 1610 and the interface circuit 1620 are coupled to each other. It can be understood that the interface circuit 1620 may be a transceiver or an input/output interface. Optionally, the communication apparatus 1600 may further include a memory 1630, configured to: store instructions executed by the processor 1610, store input data required by the processor 1610 to run instructions, or store data generated after the processor 1610 runs instructions.

When the communication apparatus 1600 is configured to implement the method shown in FIG. 7, the processor 1610 is configured to implement a function of the processing unit 1510, and the interface circuit 1620 is configured to implement a function of the transceiver unit 1520.

When the communication apparatus is a chip used in a tag, the tag chip implements a function of the tag in the foregoing method embodiment. The tag chip receives information from another module (such as a radio frequency module or an antenna) in the tag, where the information is sent by the reader to the tag; or the tag chip sends information to another module (such as a radio frequency module or an antenna) in the tag, where the information is sent by the tag to the reader.

When the communication apparatus is a module used in a reader, the reader module implements a function of the reader in the foregoing method embodiment. The reader module receives information from another module (such as a radio frequency module or an antenna) in the reader, where the information is sent by the tag to the reader; or the reader module sends information to another module (such as a radio frequency module or an antenna) in the reader, where the information is sent by the reader to the tag. The reader module herein may be a baseband chip of the reader.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a reader or a tag. Certainly, the processor and the storage medium may also exist in a reader or a tag as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. An information receiving method, comprising:
receiving a first frame from a network device based on a first frequency domain width, wherein the first frame comprises first information;
determining a second frequency domain width based on the first information; and
receiving a second frame from the network device based on the second frequency domain width, wherein the second frame comprises second information, the second frequency domain width is used to determine transmission duration of one bit or symbol in the second information, and the second frame and the first frame are a same frame or different frames.

2. The method according to claim 1, wherein the receiving a first frame from a network device based on a first frequency domain width comprises: receiving the first frame from the network device based on a first subcarrier spacing SCS and the first frequency domain width.

3. The method according to claim 1 or 2, wherein the receiving a second frame from the network device based on the second frequency domain width comprises: receiving the second frame from the network device based on a second SCS and the second frequency domain width, wherein the second SCS is the same as or different from the first SCS.

4. The method according to any one of claims 1 to 3, wherein the first information is common signaling, the common signaling comprises indication information of the second frequency domain width, and the second information is downlink data.

5. The method according to any one of claims 1 to 3, wherein the first frame comprises a preamble sequence, the preamble sequence indicates that the first frame starts, the preamble sequence is the first information, the second frame comprises downlink data, and the downlink data is the second information; and
the determining a second frequency domain width based on the first information comprises: determining, based on a correspondence between the preamble sequence and a frequency domain width, the second frequency domain width corresponding to the preamble sequence in the first frame; or determining, based on a correspondence between spreading code of the preamble sequence and a frequency domain width, the second frequency domain width corresponding to the spreading code of the preamble sequence in the first frame.

6. The method according to any one of claims 1 to 3, wherein the first frame comprises control information, the control information is the first information, the second frame comprises downlink data, the downlink data is the second information, and the control information comprises indication information of the second frequency domain width.

7. An information sending method, comprising:
sending a first frame to a terminal based on a first frequency domain width, wherein the first frame comprises first information, and the first information is used to determine a second frequency domain width; and
sending a second frame to the terminal based on the second frequency domain width, wherein the second frame comprises second information, the second frequency domain width is used to determine transmission duration of one bit or symbol in the second information, and the second frame and the first frame are a same frame or different frames.

8. The method according to claim 7, wherein the sending a first frame to a terminal based on a first frequency domain width comprises: sending the first frame to the terminal based on a first subcarrier spacing SCS and the first frequency domain width.

9. The method according to claim 7 or 8, wherein the sending a second frame to the terminal based on the second frequency domain width comprises: sending the second frame to the terminal based on a second SCS and the second frequency domain width, wherein the second SCS is the same as or different from the first SCS.

10. The method according to any one of claims 7 to 9, wherein the first information is common signaling, the common signaling comprises indication information of the second frequency domain width, and the second information is downlink data.

11. The method according to any one of claims 7 to 9, wherein the first frame comprises a preamble sequence, the preamble sequence indicates that the first frame starts, the preamble sequence is the first information, the second frame comprises downlink data, and the downlink data is the second information; and
there is a correspondence between the preamble sequence and a frequency domain width, and the preamble sequence in the first frame corresponds to the second frequency domain width; or there is a correspondence between spreading code of the preamble sequence and a frequency domain width, and the spreading code of the preamble sequence in the first frame corresponds to the second frequency domain width.

12. The method according to any one of claims 7 to 9, wherein the first frame comprises control information, the control information is the first information, the second frame comprises downlink data, the downlink data is the second information, and the control information comprises indication information of the second frequency domain width.

13. An information receiving apparatus, comprising:
a transceiver unit, configured to receive a first frame from a network device based on a first frequency domain width, wherein the first frame comprises first information; and
a processing unit, configured to determine a second frequency domain width based on the first information, wherein
the transceiver unit is further configured to receive a second frame from the network device based on the second frequency domain width, wherein the second frame comprises second information, the second frequency domain width is used to determine transmission duration of one bit or symbol in the second information, and the second frame and the first frame are a same frame or different frames.

14. The apparatus according to claim 13, wherein the receiving a first frame from a network device based on a first frequency domain width comprises: receiving the first frame from the network device based on a first subcarrier spacing SCS and the first frequency domain width.

15. The apparatus according to claim 13 or 14, wherein the receiving a second frame from the network device based on the second frequency domain width comprises: receiving the second frame from the network device based on a second SCS and the second frequency domain width, wherein the second SCS is the same as or different from the first SCS.

16. The apparatus according to any one of claims 13 to 15, wherein the first information is common signaling, the common signaling comprises indication information of the second frequency domain width, and the second information is downlink data.

17. The apparatus according to any one of claims 13 to 15, wherein the first frame comprises a preamble sequence, the preamble sequence indicates that the first frame starts, the preamble sequence is the first information, the second frame comprises downlink data, and the downlink data is the second information; and
the determining a second frequency domain width based on the first information comprises: determining, based on a correspondence between the preamble sequence and a frequency domain width, the second frequency domain width corresponding to the preamble sequence in the first frame; or determining, based on a correspondence between spreading code of the preamble sequence and a frequency domain width, the second frequency domain width corresponding to the spreading code of the preamble sequence in the first frame.

18. The apparatus according to any one of claims 13 to 15, wherein the first frame comprises control information, the control information is the first information, the second frame comprises downlink data, the downlink data is the second information, and the control information comprises indication information of the second frequency domain width.

19. An information sending apparatus, comprising:
a transceiver unit, configured to send a first frame to a terminal based on a first frequency domain width, wherein the first frame comprises first information, and the first information is used to determine a second frequency domain width; and
the transceiver unit is further configured to send a second frame to the terminal based on the second frequency domain width, wherein the second frame comprises second information, the second frequency domain width is used to determine transmission duration of one bit or symbol in the second information, and the second frame and the first frame are a same frame or different frames.

20. The apparatus according to claim 19, wherein the sending a first frame to a terminal based on a first frequency domain width comprises: sending the first frame to the terminal based on a first subcarrier spacing SCS and the first frequency domain width.

21. The apparatus according to claim 19 or 20, wherein the sending a second frame to the terminal based on the second frequency domain width comprises: sending the second frame to the terminal based on a second SCS and the second frequency domain width, wherein the second SCS is the same as or different from the first SCS.

22. The apparatus according to any one of claims 19 to 21, wherein the first information is common signaling, the common signaling comprises indication information of the second frequency domain width, and the second information is downlink data.

23. The apparatus according to any one of claims 19 to 21, wherein the first frame comprises a preamble sequence, the preamble sequence indicates that the first frame starts, the preamble sequence is the first information, the second frame comprises downlink data, and the downlink data is the second information; and
there is a correspondence between the preamble sequence and a frequency domain width, and the preamble sequence in the first frame corresponds to the second frequency domain width; or there is a correspondence between spreading code of the preamble sequence and a frequency domain width, and the spreading code of the preamble sequence in the first frame corresponds to the second frequency domain width.

24. The apparatus according to any one of claims 19 to 21, wherein the first frame comprises control information, the control information is the first information, the second frame comprises downlink data, the downlink data is the second information, and the control information comprises indication information of the second frequency domain width.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 6 or the method according to any one of claims 7 to 12 by using a logic circuit or executing code instructions.

26. A computer-readable storage medium, wherein the storage medium stores a computer program or instructions; and when the computer program or the instructions is/are executed by a communication apparatus, the method according to any one of claims 1 to 6 or the method according to any one of claims 7 to 12 is implemented.

27. A computer program product, comprising instructions, wherein when an information receiving or sending apparatus reads and executes the instructions, the apparatus is enabled to perform the method according to any one of claims 1 to 6 or the method according to any one of claims 7 to 12.

28. A chip, comprising a processor, wherein the processor is coupled to a memory, and is configured to execute a computer program or instructions stored in the memory, and when the processor executes the computer program or the instructions, the method according to any one of claims 1 to 6 or the method according to any one of claims 7 to 12 is performed.
